(19) Europäisches Patentamt
European Patent Office
Office européen des brevets

(11) Veröffentlichungsnummer : **0 074 582**
**B1**

(12) # EUROPÄISCHE PATENTSCHRIFT

(45) Veröffentlichungstag der Patentschrift : **03.04.85**

(51) Int. Cl.[4] : **C 07 F 9/34**, C 07 F 9/30

(21) Anmeldenummer : **82108139.5**

(22) Anmeldetag : **03.09.82**

(54) **Verfahren zur Herstellung von Dialkylphosphinsäurehalogeniden.**

(30) Priorität : **09.09.81 DE 3135666**

(43) Veröffentlichungstag der Anmeldung : **23.03.83 Patentblatt 83/12**

(45) Bekanntmachung des Hinweises auf die Patenterteilung : **03.04.85 Patentblatt 85/14**

(84) Benannte Vertragsstaaten : **BE CH DE FR GB IT LI NL**

(56) Entgegenhaltungen :
**DE-A- 2 129 583**
**DE-A- 2 225 545**
**DE-B- 1 018 414**
**US-A- 2 994 715**
**SOVIET INVENTIONS ILLUSTRATED, Section 1 Chemical, April 1973, Group Five General Organic, Seite 10**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Kleiner, Hans-Jerg, Dr.**
**Altkönigstrasse 11a**
**D-6242 Kronberg/Taunus (DE)**

**EP 0 074 582 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Dialkylphosphinsäurehalogenide sind Verbindungen der allgemeinen Formel

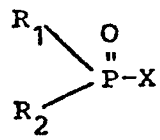

worin $R_1$ und $R_2$ = Alkylreste, und X = Halogen bedeuten.

Sie sind hauptsächlich Zwischenprodukte insbesondere auf dem Pflanzenschutz- und Flammschutzmittel-Sektor.

Zur ihrer Herstellung ist eine Reihe verschiedener Methoden bekannt. Eine solche ist z. B. beschrieben in Houben-Weyl, Methoden der Organischen Chemie, Georg Thieme Verlag Stuttgart 1963, Bd. XII/1, S. 241 ; nach dieser Methode werden Dialkylphosphinsäuren mit Phosphorpentachlorid $PCl_5$ oder Thionylchlorid $SOCl_2$ zu den entsprechenden Dialkylphosphinsäurechloriden umgesetzt :

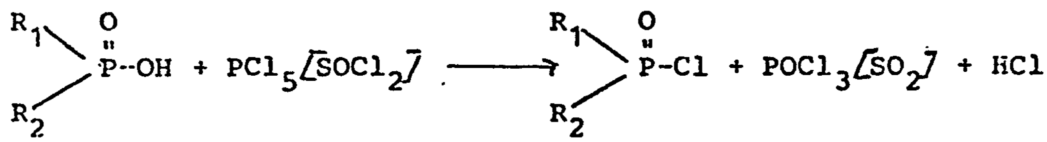

Nach der gleichen Literaturstelle können anstelle der freien Dialkylphosphinsäuren auch deren Alkylester verwendet werden. Als Halogenierungsmittel ist für diesen Fall jedoch nur $PCl_5$ angegeben :

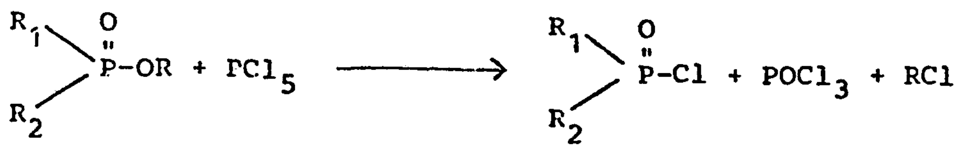

Bei dieser Reaktion sollen allerdings zuweilen auch die entsprechenden Dialkylphosphinsäureanhydride als Nebenprodukte auftreten, was wohl auf eine weitere Umsetzung der bei der Hauptreaktion gebildeten Dialkylphosphinsäurechloride mit nicht unumgesetztem Ausgangsmaterial zurückzuführen ist :

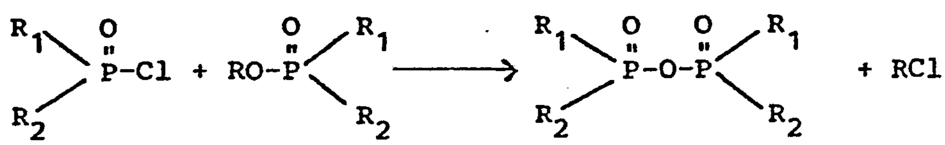

Nach S. 266 desselben Houben-Weyl-Bandes beruht auf dieser Reaktion ein Verfahren zur Herstellung von Dialkylphosphinsäureanhydriden (Reaktionstemperatur etwa 150-160 °C).

Die gleiche Literaturstelle offenbart auch die Herstellung des Anhydrids der Diphenylphosphinsäure durch Erhitzen der Diphenylphosphinsäure auf 230 °C :

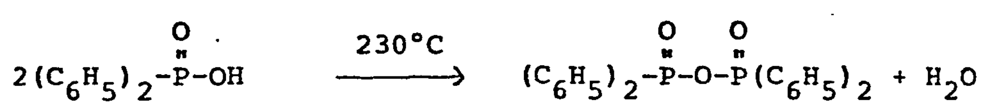


Den vorerwähnten Methoden zur Herstellung von Dialkylphosphinsäurehalogeniden recht ähnliche Verfahren sind auch bekannt aus der DE-OS 21 29 583 sowie deren Zusatz-DE-OS 22 25 545. Danach werden Dialkylphosphinsäurealkylester (DE-OS 21 29 583) sowie die freien Dialkylphosphinsäuren oder deren Alkali- oder Ammoniumsalze (DE-OS 22 25 545) mit den Halogeniden der Kohlensäure (insbesondere Phosgen) oder der Oxalsäure, oder mit Thionylhalogeniden umgesetzt ; als Reaktionstemperaturen sind Temperaturen zwischen − 20 und + 150 °C angegeben. Die Reaktion soll über die jeweiligen Dialkylphosphinsäureanhydride verlaufen, welche auch isoliert werden können. Die Reaktion läßt sich durch folgendes Formelschema (ähnlich den vorerwähnten Reaktionen) wiedergeben ; die Darstellung erfolgt mit Phosgen $COCl_2$ als beispielhaftem Halogenierungsmittel :

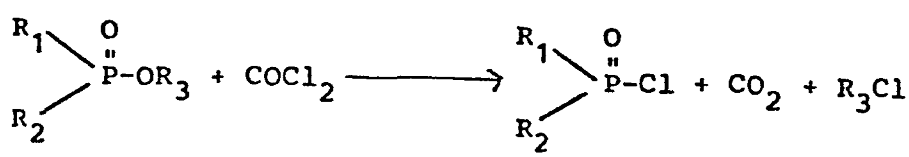

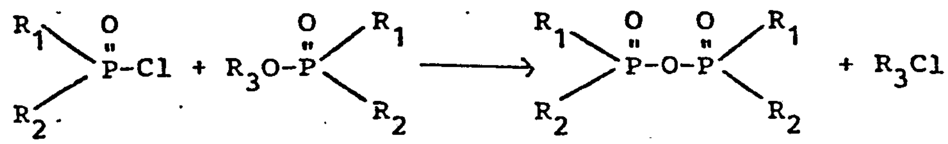

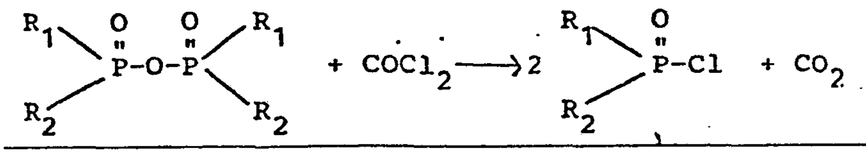

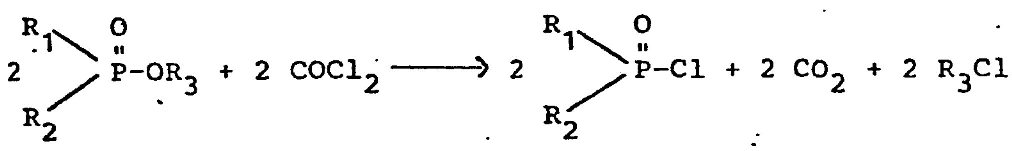

[$R_1$, $R_2$ = Alkylreste (DE-OS 21 29 583)
$R_3$ = H-, Alkali- oder $NH_4$-ion (DE-OS 22 25 545)]

Obwohl die bekannten Verfahren zur Herstellung von Dialkylphosphinsäurehalogeniden recht hohe Ausbeuten liefern und auch sonst nicht unvorteilhaft sind, sind sie insbesondere für die Durchführung in technischem Maßstab doch noch verbesserungsbedürftig ; denn die zur Halogenierung verwendeten anorganischen Säurehalogenide stellen einen nicht zu vernachlässigenden Kostenfaktor dar. Z. T. sind diese Säurehalogenide auch nicht ganz einfach handzuhaben (was vor allem für das außerordentlich giftige Phosgen $COCl_2$ zutrifft), z. T. führen sie zu unerwünschten und von den bei der Reaktion gebildeten Dialkylphosphinsäurehalogeniden oft nicht ganz einfach abtrennbaren Produkten (Phosphoroxyhalogenide !).

Es bestand daher die Aufgabe, die bekannten Verfahren zu verbessern oder ein neues wirtschaftlicheres Verfahren zur Herstellung von Dialkylphosphinsäurehalogeniden zu finden.

Diese Aufgabe konnte erfindungsgemäß durch Umsetzung von Dialkylphosphinsäureanhydriden mit Halogenwasserstoffen bei erhöhter Temperatur gelöst werden.

Erfindungsgegenstand ist daher ein Verfahren zur Herstellung von Dialkylphosphinsäurehalogeniden durch Umsetzung von Dialkylphosphinsäureanhydriden mit einer anorganischen Halogenverbindung bei erhöhter Temperatur ; das Verfahren ist dadurch gekennzeichnet, daß man als anorganische Halogenverbindung Halogenwasserstoff verwendet und daß man die Umsetzung bei Temperaturen zwischen 140 und 250 °C, vorzugsweise zwischen 170 und 220 °C, durchführt.

Die Umsetzung läuft nach folgender Reaktionsgleichung ab :

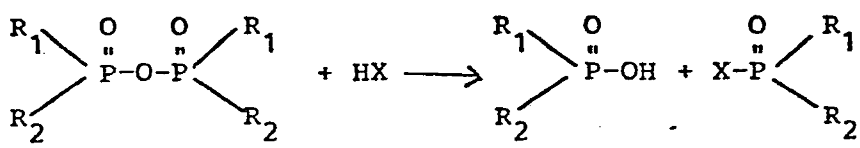

($R_1$, $R_2$ = Alkyl,
X = Halogen)

Unter Verwendung der wohl einfachsten Halogenverbindungen werden hier, bezogen auf umgesetztes Ausgangsmaterial, praktisch quantitative Ausbeuten im Sinne der vorstehenden Reaktionsgleichung erhalten. Dies war außerordentlich überraschend, weil aufgrund der bekannten Dehydratisierung der Diphenylphosphinsäure zu deren Anhydrid bei 230 °C (vgl. Houben-Weyl, Methoden der Organischen Chemie, Bd. XII/1 (1963) S. 266) zu erwarten war, daß aus Phosphinsäureanhydriden auch in Gegenwart von Halogenwasserstoff in einem ähnlichen Temperaturbereich im Ergebnis praktisch nichts passiert. Unter Zugrundelegung der vorstehenden Reaktionsgleichung mußte man dann nämlich davon ausgehen, daß aus der zunächst gebildeten freien Dialkylphosphinsäure bei Temperaturen von größenordnungsmäßig um 200 °C — noch dazu in Gegenwart des bekanntermaßen stark dehydratisierend wirkenden Halogenwasserstoffs — wieder das entsprechende Dialkylphosphinsäureanhydrid entsteht. Das dabei gebildete Wasser konnte sich mit dem Dialkylphosphinsäurehalogenid ebenfalls wieder zum entsprechenden Anhydrid umsetzen. Die zu erwartende Reaktionsfolge läßt sich durch nachstehendes Reaktionsschema illustrieren :

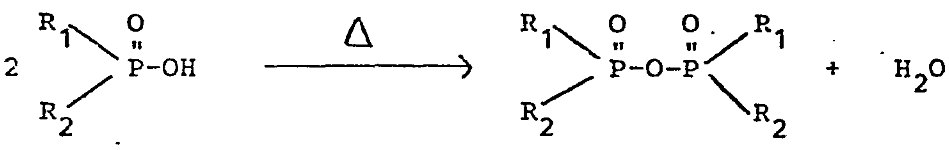

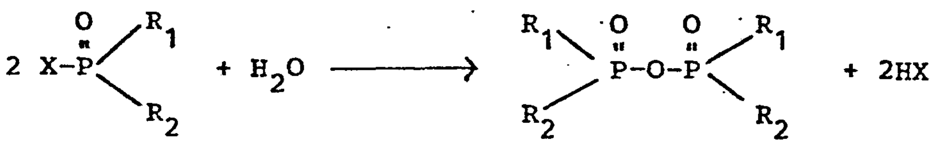

Nichts von dem aufgrund des einschlägigen Standes der Technik Erwarteten tritt hier jedoch ein.

Als Ausgangsstoffe für das erfindungsgemäße Verfahren kommen im Prinzip alle möglichen Dialkylphosphinsäureanhydride in Frage. Bevorzugt sind jedoch solche mit Alkylresten nur bis zu 6 C-Atomen, insbesondere nur bis zu 4 C-Atomen. Folgende Dialkylphosphinsäureanhydride werden in beispielhafter Weise genannt :

Dimethyl-, Diethyl-, Ethylmethyl-, Methylpropyl-, Methylpentyl-, Dipropylphosphinsäureanhydrid etc.

Die Herstellung dieser Anhydride kann auf bekannte Weise erfolgen wie z. B. beschrieben in DE-OS 21 29 583 und DE-OS 22 25 545 (aus den Dialkylphosphinsäureestern bzw. den freien Dialkylphosphinsäuren oder deren Salzen und den Halogeniden der Kohlensäure und der Oxalsäure, sowie mit Thionylhalogeniden) und DE-OS 27 58 580 (aus den freien Dialkylphosphinsäuren und aliphatischen Carbonsäureanhydriden, insbesondere Essigsäureanhydrid). Als Halogenwasserstoff werden vorzugsweise Chlorwasserstoff HCl oder Bromwasserstoff HBr verwendet. In diesen Fällen entsteht dann nach dem erfindungsgemäßen Verfahren das entsprechende Dialkylphosphinsäurechlorid bzw. -bromid. Es ist weiterhin bevorzugt, den Halogenwasserstoff im Überschuß mit einer Geschwindigkeit von etwa 3 bis 10, vorzugsweise von etwa 4 bis 6 Mol pro Mol Dialkylphosphinsäureanhydrid und Stunde in das flüssige oder in einem inerten Lösungsmittel gelöste Dialkylphosphinsäureanhydrid einzuleiten. Inerte, entsprechend hoch siedende Lösungsmittel werden vor allem dann verwendet, wenn die Ausgangs-Anhydride ein höheres Molekulargewicht besitzen (bei längeren Alkylresten $R_1$ und $R_2$).

Die Reaktion kann unter unterschiedlichem Druck durchgeführt werden (z. B. unter einem Überdruck von ca. 5-10 bar), doch ist die Durchführung bei Normaldruck bevorzugt. Das bei der Reaktion gebildete Dialkylphosphinsäurehalogenid destilliert bei der angewandten Reaktionstemperatur im überschüssigen Halogenwasserstoffstrom ab, zusammen mit geringen Mengen an Ausgangsmaterial (Anhydrid) sowie gegebenenfalls der entsprechenden Phosphinsäure. Die anfallenden Rohdestillate werden daher zweckmäßig noch einer Reinigungsdestillation unterworfen, vorteilhaft gleich nach ihrem Anfall und in dem Maße, in dem die Rohdestillate gebildet werden. Die Rückstände der Reinigungsdestillate stellen hauptsächlich das Phosphinsäureanhydrid dar, das in den Prozeß zurückgeführt wird. Als Rückstand der Reaktion verbleiben die Phosphinsäuren, die auf bekannte Weise — vorzugsweise nach dem Verfahren der DE-OS 27 58 580 — wieder in die Anhydride überführt werden.

Das Verfahren ist sowohl kontinuierlich als auch diskontinuierlich durchführbar.

Wegen der Verwendung des praktisch einfachsten Halogenierungsmittels (Halogenwasserstoff) und dem praktisch quantitativen Reaktionsablauf stellt das Verfahren einen erheblichen Fortschritt auf diesem Gebiet dar. Wenn die als Ausgangsstoffe verwendeten Dialkylphosphinsäureanhydride ohne den Einsatz von anorganischen Säurehalogeniden hergestellt werden (also z. B. nach dem Verfahren der DE-OS 27 58 580) sind für den Erhalt der letztlich gewünschten Dialkylphosphinsäurehalogenide überhaupt keine anorganischen Säurehalogenide notwendig.

Die Erfindung wird nun durch die nachfolgenden Beispiele näher erläutert.

## Beispiel 1

200 g Ethyl-methyl-phosphinsäureanhydrid (= 1,01 Mol) werden unter Rühren auf 200 °C erhitzt. Nun wird Chlorwasserstoff im Überschuß eingeleitet (Einleitungsgeschwindigkeit etwa 200 g/Std. = ca. 5,5 Mol/Mol Ethyl-methyl-phosphinsäureanhydrid und Stunde). In einer Vorlage sammelt sich ein Destillat, das jeweils portionsweise im Wasserstrahlvakuum destilliert wird. Die Destillationsrückstände stellen das Ethyl-methyl-phosphinsäureanhydrid dar und werden in den Reaktionsansatz zurückgeführt. Nach etwa 8 Std. sind 80 g Ethyl-methyl-phosphinsäurechlorid gewonnen worden. Als Rückstand verbleiben 155 g. Der Rückstand besteht aus 67,5 g Ethyl-methyl-phosphinsäure, 75 g Ethyl-methyl-phosphinsäureanhydrid und 12,5 g Chlorwasserstoff. Das entspricht einem Umsatz von etwa 63 % und einer Ausbeute von etwa 100 % d. Th., bezogen auf das umgesetzte Ausgangsmaterial.

## Beispiel 2

200 g Methyl-propyl-phosphinsäureanhydrid (= 0,886 Mol) werden unter Rühren auf 195-200 °C erhitzt. Nun wird Chlorwasserstoff im Überschuß eingeleitet (Einleitungsgeschwindigkeit etwa 200 g/Std.

= ca. 6 Mol/Mol Phosphinsäureanhydrid und Stunde). In einer Vorlage sammelt sich ein Destillat, das jeweils portionsweise im Wasserstrahlvakuum destilliert wird. Die Destillationsrückstände stellen das Methyl-propyl-phosphinsäureanhydrid dar und werden in den Reaktionsansatz zurückgeführt. Nach etwa 10 Std. sind 72 g Methyl-propyl-phosphinsäure-chlorid (Kp : 122 °C/3,47 kPa) gewonnen worden. Das entspricht einem Umsatz von etwa 58 % d. Th. Die Ausbeute beträgt unter Berücksichtigung der im Rückstand verbliebenen Menge an Methyl-propyl-phosphinsäure-anhydrid und -säure etwa 100 % d. Th., bezogen auf das umgesetzte Ausgangsmaterial.

Beispiel 3

100 g Methyl-propyl-phosphinsäureanhydrid (= 0,443 Mol) werden unter Rühren auf 200 °C erhitzt. Nun wird Bromwasserstoff eingeleitet (Einleitungsgeschwindigkeit etwa 170 g/Std. = ca. 4,8 Mol/Mol Phosphinsäureanhydrid und Stunde). In einer Vorlage sammelt sich ein Destillat, das anschließend im Vakuum destilliert wird. Nach 6 Std. sind 35 g Methyl-propyl-phosphinsäurebromid (Kp : 75 °C/0,107 kPa) gewonnen worden. Das entspricht einem Umsatz von etwa 43 % d. Th. Die Ausbeute beträgt unter Berücksichtigung der im Rückstand verbliebene Mengen an Methyl-propyl-phosphinsäureanhydrid und -säure etwa 100 % d. Th., bezogen auf das umgesetzte Ausgangsmaterial.

**Ansprüche**

1. Verfahren zur Herstellung von Dialkylphosphinsäurehalogeniden durch Umsetzung von Dialkylphosphinsäureanhydriden mit einer anorganischen Halogenverbindung bei erhöhter Temperatur, dadurch gekennzeichnet, daß man als anorganische Halogenverbindung Halogenwasserstoff verwendet und daß man die Umsetzung bei Temperaturen zwischen 140 und 250 °C, vorzugsweise zwischen 170 und 220 °C, durchführt.

2. Verfahren nach Anspruch 1, dadurch gekennzeichnet, daß man als Dialkylphosphinsäureanhydride Verbindungen der Formel

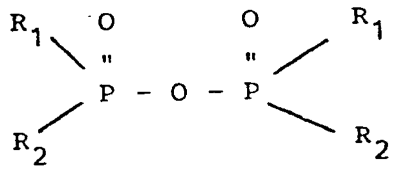

worin $R_1$ und $R_2$ unabhängig voneinander Alkylreste mit 1 bis 6, insbesondere mit 1 bis 4 C-Atomen bedeuten, verwendet.

3. Verfahren nach einem der Ansprüche 1 bis 2, dadurch gekennzeichnet, daß man als Halogenwasserstoff Chlor- oder Bromwasserstoff verwendet.

4. Verfahren nach einem der Ansprüche 1 bis 3, dadurch gekennzeichnet, daß man den Halogenwasserstoff im Überschuß mit einer Geschwindigkeit von etwa 3 bis 10, vorzugsweise von etwa 4 bis 6 Mol pro Mol Dialkylphosphinsäureanhydrid und Stunde in das flüssige oder in einem inerten Lösungsmittel gelöste Dialkylphosphinsäureanhydrid einleitet.

**Claims**

1. A process for the preparation of dialkylphosphinic acid halides by reaction of dialkylphosphinic anhydrides with an inorganic halogen compound at elevated temperature, characterized in using hydrogen halide as inorganic halogen compound, and in carrying out the reaction at a temperature of from 140 to 250 °C, preferably 170 to 220 °C.

2. The process as claimed in Claim 1, characterized in using as dialkylphosphinic anhydrides compounds of the formula

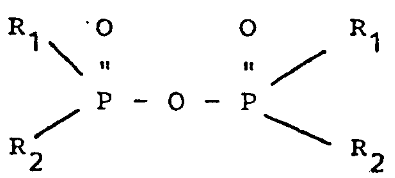

in which $R_1$ and $R_2$, independently from each other, are alkyl radicals having from 1 to 6, especially 1 to 4, carbon atoms.

3. The process as claimed in one of Claim 1 or 2, characterized in using hydrogen chloride or hydrogen bromide as hydrogen halide.

4. The process as claimed in one of Claims 1 to 3, characterized in introducing the hydrogen halide in excess at a rate of from about 3 to 10, preferably about 4 to 6, mols per mol of dialkylphosphinic anhydride and hour into the dialkylphosphinic anhydride which is either liquid or dissolved in an inert solvent.

**Revendications**

1. Procédé pour préparer des halogénures d'acides dialkyl-phosphiniques par réaction d'anhydrides dialkyl-phosphiniques avec un composé halogéné minéral, à température élevée, procédé caractérisé en ce qu'on utilise, comme composé halogéné minéral, un halogénure d'hydrogène et en ce qu'on effectue la réaction à des températures comprises entre 140 et 250 °C, de préférence entre 170 et 220 °C.

2. Procédé selon la revendication 1, caractérisé en ce qu'on utilise, comme anhydrides dialkyl-phosphiniques, des composés répondant à la formule :

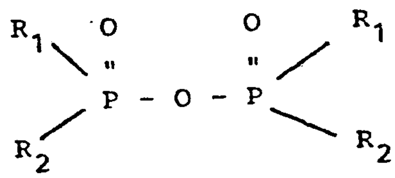

dans laquelle $R_1$ et $R_2$ représentent chacun, indépendamment l'un de l'autre, un radical alkyle contenant de 1 à 6 atomes de carbone, plus spécialement de 1 à 4.

3. Procédé selon l'une des revendications 1 et 2, caractérisé en ce qu'on utilise, comme halogénure d'hydrogène, le chlorure d'hydrogène ou le bromure d'hydrogène.

4. Procédé selon l'une quelconque des revendications 1 à 3, caractérisé en ce qu'on introduit l'halogénure d'hydrogène en excès, à un débit d'environ 3 à 10 mol, de préférence d'environ 4 à 6 moles, par mole d'anhydride dialkylphosphinique et par heure, dans l'anhydride dialkyl-phosphinique liquide ou dissous dans un solvant inerte.